# EUROPÄISCHE PATENTSCHRIFT

(11) **EP 4 003 116 B1**
(45) Veröffentlichungstag und Bekanntmachung des Hinweises auf die Patenterteilung: **27.12.2023**
(21) Anmeldenummer: 20743986.0
(22) Anmeldetag: 15.07.2020
(51) Int. Cl.: A47J 43/07

(54) **RÜHRWERK FÜR EINE KÜCHENMASCHINE UND KÜCHENMASCHINE**
STIRRING MECHANISM FOR A KITCHEN APPLIANCE AND KITCHEN APPLIANCE
MÉCANISME DE REMUAGE POUR UN APPAREIL DE CUISINE ET APPAREIL DE CUISINE

(30) Priorität: 30.07.2019 DE 102019211307
(43) Veröffentlichungstag der Anmeldung: 01.06.2022
(73) Patentinhaber: BSH Hausgeräte GmbH, 81739 München (DE)
(72) Erfinder: BÄCKER, Anna, 83301 Traunreut (DE); BERZELAK, Matej, 3334 Luce (SI); IRSIC, Tomo, 3214 Zrece (SI); ROBIDA, Tomaz, 3341 Smartno ob Dreti (SI); SCHWAIGER, Heike, 83308 Trostberg (DE); SLAKAN, Gregor, 1420 Trbovlse (SI)
(86) Internationale Anmeldenummer: PCT/EP2020/069986
(87) Internationale Veröffentlichungsnummer: WO 2021/018590

(56) Entgegenhaltungen:
- WO-A1-2017/013155
- WO-A1-2017/089828
- DE-A1-102007 056 711
- US-A1- 2011 185 917

## Beschreibung

Die Erfindung betrifft ein Rührwerk für eine elektromotorische Küchenmaschine und eine Küchenmaschine. Rührwerke in elektromotorischen Küchenmaschinen sollen bei einer Drehung um eine Achse, meistens eine vertikale Drehachse, eine bestmögliche Durchmischung der flüssigen und/oder festen Bestandteile des Rührguts in sämtliche Richtungen erreichen. Gewöhnlich existieren daher eine Vielzahl von Rührwerken, die jeweils für eine spezielles Rührgut optimiert sind. Beispiele für unterschiedliche Rührwerke sind Knetwerk und Schraubenwerk. Nachteilig ist jedoch die Vielzahl der Rührwerke und die damit verbundene richtige Auswahl des geeigneten Rührwerks.

DE102007056711 A1 offenbart ein Rührwerk zum Rühren von Rührgut in einem Gefäß einer elektromotorischen Küchenmaschine, mit einem Grundkörper, der sich entlang einer Drehachse des Rührwerks erstreckt und der einen Kupplungsabschnitt zur lösbaren Kupplung mit einer Motorwelle eines Elektromotors der Küchenmaschine hat, wobei an dem Grundkörper ein erstes und zweites Rührelement angeordnet sind, wobei sich entlang des Grundkörpers ein drittes Rührelement erstreckt, und wobei das erste Rührelement und das zweite Rührelement derart angeordnet sind, dass sie sich im Betrieb der Küchenmaschine nahe eines Gefäßbodens auf nahezu gleicher Höhe befinden, wohingegen das dritte Rührelement eine wesentliche Erstreckung in vertikaler Richtung hat.

Aufgabe der Erfindung ist es, ein Rührwerk für eine Küchenmaschine, insbesondere für den Haushaltsbereich, zu schaffen, das mehrere Werkzeugfunktionen in sich vereint. Zudem ist es Aufgabe der Erfindung, ein optimiertes Rührverfahren von Rührgut und eine Küchenmaschine mit einem verbesserten Rührwerk zu schaffen.

Diese Aufgabe wird gelöst durch ein Rührwerk mit den Merkmalen des Patentanspruchs 1, und durch eine Küchenmaschine mit den Merkmalen des Patentanspruchs 11.

Ein erfindungsgemäßes Rührwerk zum Rühren von Rührgut in einem Gefäß einer elektromotorischen Küchenmaschine, insbesondere eine Küchenmaschine für den häuslichen Gebrauch, hat einen Grundkörper, der sich entlang einer Drehachse des Rührwerks erstreckt. Zur lösbaren Kopplung mit einer Motorwelle des Elektromotors der Küchenmaschine hat der Grundkörper einen Kupplungsabschnitt. Erfindungsgemäß ist an dem Grundkörper ein unteres Rührelement angeordnet, das dazu eingerichtet ist, das Rührgut mit einer unteren Bewegungskomponente weg von der Drehachse zu beaufschlagen. Weiterhin erstreckt sich entlang des Grundkörpers ein gewindeartiges Rührelement, das dazu eingerichtet ist, das Rührgut mit einer zur unteren Bewegungskomponente ersten orthogonalen Bewegungskomponente, also mit einer ersten axialen Bewegungskomponente, zu beaufschlagen. Des Weiteren ist an einem Ausleger, der sich von dem Gründerkörper weg von der Drehachse erstreckt, ein radial äußeres Rührelement angeordnet, das dazu eingerichtet ist, das Rührgut mit einer zur unteren Bewegungskomponente zweiten orthogonalen Bewegungskomponente, also mit einer zweiten axialen Bewegungskomponente, und/oder einer unteren Gegenbewegungskomponente zu beaufschlagen.

Angaben wie "radial", "axial" und "Umfangsrichtung" beziehen sich auf die Drehachse des Rührwerks. Angaben wie "außen" und "innen" beziehen sich auf eine radiale Position zueinander bezogen auf die Drehachse des Rührwerks. Angaben wie "oben", "unten", "höher" und "tiefer" beziehen sich auf eine vertikale Richtung, die einer Einbaulage des Rührwerks in eine Küchenmaschine bei vorgesehener Verwendungsausrichtung derselben entspricht. "Unten" ist ein Gefäßboden und "oben" ist eine Gefäßöffnung zum Befüllen des Gefäßes bzw. ein Gefäßdeckel zum Verschließen der Gefäßöffnung. Angaben wie "vor" und "hinter" beziehen sich auf die Drehrichtung des Rührwerks im Betrieb. Zudem wird erwähnt, dass unter "Rührgut" insbesondere auch Teilmengen oder Bestandteile des Rührguts verstanden werden.

Erfindungsgemäß hat bei ordnungsgemäßer Ausrichtung der das Rührwerk aufnehmenden Küchenmaschine das innere Rührelement eine horizontale Förderrichtung und das äußere Rührelement sowie das gewindeartige Rührelement haben jeweils eine vertikale Förderrichtung. Zudem beaufschlagt das äußere Rührelement das Rührgut zusätzlich oder alternativ mit einer zur unteren Bewegungsrichtung entgegengerichteten unteren Gegenbewegungskomponente, so dass das Rührgut, das von dem äußeren Rührelement nicht vertikal nach oben bewegt wird, weil es sich radial zu weit innen befindet, zurück in Richtung der Drehachse bewegt und dann wieder von dem unteren Rührelement weg von der Drehachse bewegt wird. Hierdurch wird eine optimierte Durchmischung bzw. Vermischung des Rührguts erzielt. Betrachtet man ein Schnittbild entlang der Drehachse des Rührwerks, wird das Rührgut zwischen einer Gefäßwandung und der Drehachse entweder in einem vertikalen Kreis oder in zwei gegenläufigen vertikalen Kreisen bewegt. Gleichzeitig wird das Rührgut bzw. werden Teilmengen des Rührguts in einem horizontalen Kreis geführt. Hierdurch wird ein größtmöglicher Weg des Rührguts durch das Gefäß erreicht, was eine größtmögliche Durchmischung der festen und flüssigen Bestandteile des Rührguts ermöglicht. Das Rührwerk ermöglicht sowohl eine verbesserte Durmischung von Rührgut mit einem hohen Anteil an Feststoffen wie einer Fleischmasse, aber auch mit einem hohen Flüssigkeitsanteil wie Puddings, Eintöpfen oder Suppen. Das erfindungsgemäße Rührwerk ist zumindest eine Kombination eines Knetwerks und eines Schraubwerks. Zusätzlich kann es die Funktion eines Messerwerks aufweisen.

Bei einer bevorzugten Ausführungsform hat das untere Rührelement einen Spitzenbereich, der gegenüber einem Wurzelbereich des Rührelements verjüngt ausgebildet ist. Das untere Rührelement läuft in Richtung seines freien Endes aus. Hierdurch ist das untere Rührelement im Bereich seiner größten Belastung /Wurzelbereich) verstärkt gegenüber dem Bereich seiner kleinsten Belastung (Spitzenbereich). Weiterhin hat das untere Rührelement eine Schaberkante und eine Schiebefläche. Die Schiebefläche ist in Drehrichtung hinter der Schaberkante angeordnet und hat ausgehend von dieser einen ansteigenden Verlauf. Die Schiebekante hat somit als vordere Kante die bodennahe Schaberkante und als hintere Kante eine bodenferne Schieberkante. Durch diese Maßnahme wird erreicht, dass das bodennahe Rührgut verlässlich erfasst wird und das Rührgut nicht zwischen dem unteren Rührwerk und einem Gefäßboden hindurchgequetscht wird. Die Schieberfläche ist bevorzugterweise konvex gewölbt.

Bevorzugterweise ist der Wurzelbereich seitlich der Drehachse mit dem Grundkörper verbunden. Hierdurch wird erreicht, dass auch das Rührgut nahe der Drehachse von dem unteren Rührelement erfasst wird. Des Weiteren wird es bevorzugt, wenn der Spitzenbereich des unteren Rührelements radial ausläuft. Hierdurch wird verhindert, dass das nach außen beförderte Rührgut sich nahe der Gefäßwandung sammelt und nicht wieder in Richtung der Drehachse bewegt wird. Der Spitzenbereich hat insbesondere eine derartige Erstreckung, dass diese auf das jeweilige Gefäß abgestimmt ist, so dass der Spitzenbereich nahezu bis zur Gefäßwand geführt ist, ohne diese jedoch zu berühren. Es bleibt lediglich ein Spalt zwischen dem Spitzenbereich und der Gefäßwand stehen, der eine Berührung des Spitzenbereichs mit derselben verhindert. Wenn ein Übergangsbereich zwischen dem Gefäßboden und der Gefäßwandung als Hohlkehle ausgebildet ist, wird es bevorzugt, wenn der Spitzenbereich vor der Hohlkehle endet.

Die Bewegung des Rührgut in eine Richtung weg von der Drehachse zur Gefäßwandung lässt sich durch das unterer Rührelement verbessern, wenn die Schaberkante einen inneren Bogenabschnitt und einen gegenläufigen äußeren Bogenabschnitt aufweist. Die Schaberkante verläuft hierdurch leicht S-förmig, wobei sie im Wurzelbereich konvex ausgebildet ist und dann in Richtung des Spitzenbereichs in einen konkaven Bereich übergeht, der dann im Spitzenbereich radial ausläuft.

Bei einer Ausführungsform hat das äußere Rührelement einen Wurzelabschnitt und einen Spitzenabschnitt, der gegenüber dem Wurzelabschnitt verjüngt ausgebildet ist, wobei es von einer unteren Vorderkante ausgehend eine ansteigende Arbeitsfläche hat, die in Drehrichtung hinter der Vorderkante angeordnet ist. Durch diese Maßnahmen wird das Rührgut, das das untere Rührelement nach außen befördert hat, axial nach oben, d.h. vertikal bewegt und somit von dem Gefäßboden in Richtung einer Gefäßöffnung bzw. eines Gefäßdeckels angehoben bzw. bewegt.

Bevorzugterweise hat der Spitzenabschnitt in Drehrichtung betrachtet einen rückwärtigen Körperabschnitt, der tangential zu einer Kreisbahn verläuft, deren Mittelpunkt die Drehachse bildet. Die Kreisbahn entspricht dem Verlauf einer Gefäßwandung. Das äußere Rührelement läuft somit abschnittsweise eng entlang der Gefäßwand, insbesondere tangential zur Gefäßwand. Insbesondere ist die Vorderkante des äußeren Rührelements im Spitzenbereich bodennäher und somit tiefer als im Wurzelbereich angeordnet. Durch diese Neigung fungiert die Vorderkante im Bereich des Spitzenbereichs als gefäßbodennahe Schaberkante.

Bei einer Ausführungsform erstreckt sich das gewindeartige Rührelement bevorzugterweise von dem Wurzelbereich des unteren Rührelements entlang des Grundkörpers vertikal nach oben. Es hat dabei eine in Drehrichtung orientierte obere Führungsfläche. Durch die obere Führungsfläche wird das Rührgut vertikal nach oben entlang der Drehachse weg von dem Gefäßboden in Richtung der Gefäßöffnung bzw. des Gefäßdeckels gefördert. Bevorzugterweise geht der Wurzelbereich des unteren Rührelements in das gewindeartige Rührelement stufenlos über.

Um das Rührgut möglichst weit von dem Gefäßboden in Richtung der Gefäßöffnung bzw. des Gefäßdeckels zu bewegen, kann das Rührelement bei dieser Ausführungsform einen freien Endabschnitt haben, dessen Hinterkante höher als die Vorderkante angeordnet ist. Durch diese Maßnahme ist die obere Führungsfläche in Drehrichtung derart geneigt, dass die Vorderkante das Rührgut aufnimmt, dann das aufgenommene Rührgut über die Anstellung der oberen Führungsfläche im Bereich des freien Endabschnitts weiter zur Hinterkante bewegt wird und somit weiter nach oben gefördert wird.

Bei einer alternativen Ausführungsform hat das gewindeartige Rührelement eine in Drehrichtung orientierte untere Führungsfläche. Durch diese Maßnahme wird das Rührgut nahe der Drehachse aktiv vertikal nach unten, d.h. in Richtung des Gefäßbodens, befördert.

Bevorzugterweise hat bei dieser Ausführungsform das gewinderartige Rührelement einen Anfangsabschnitt, mittels dem es drehachsennah mit dem Ausleger verbunden ist. Es erstreckt sich bis zum Wurzelabschnitt des unteren Rührelements, wobei der Anfangsabschnitt in Drehrichtung hinter dem Spitzenabschnitt des äußeren Rührelement angeordnet ist. Durch diese Maßnahme wird das Rührgut verlässlich vertikal von oben nach unten befördert und an unmittelbar an das untere Rührelement zum Verschieben weg von der Drehachse nach außen übergeben. Dadurch, dass der Anfangsabschnitt in Drehrichtung hinter dem Spitzenabschnitt des äußeren Rührelement angeordnet ist, wird das Rührgut zuverlässig von dem gewindeartigen Rührelement erfasst, das das äußere Rührelement vertikal angehoben hat.

Eine erfindungsgemäße Küchenmaschine hat ein erfindungsgemäßes Rührwerk. Das Rührwerk ersetzt eine Vielzahl von einzelnen Rührwerken, da es die Funktionen der einzelnen Rührwerke in sich vereint. Die Küchenmaschine ist insbesondere zur häuslichen Verwendung und somit ein Haushaltsküchengerät.

Sonstige vorteilhafte Ausführungsbeispiele der Erfindung sind Gegenstand weiterer Unteransprüche.

Im Folgenden werden bevorzugte Ausführungsbeispiele der Erfindung anhand der anliegenden stark vereinfachten Figuren erläutert. Es zeigen:
Figur 1 eine Draufsicht auf ein Gefäß einer Küchenmaschine mit einem ersten Ausführungsbeispiel eines erfindungsgemäßen Rührwerks,
Figur 2 einen Schnitt durch das Gefäß mit montiertem Rührwerk,
Figuren 3 und 4 Seitansichten des Rührwerks in Einzeldarstellung,
Figuren 5 und 6 Funktionsweisen des Rührwerks,
Figur 7 eine Draufsicht auf ein Gefäß einer Küchenmaschine mit einem zweiten Ausführungsbeispiel eines erfindungsgemäßen Rührwerks,
Figur 8 einen Schnitt durch das Gefäß mit montiertem Rührwerk nach dem zweiten Ausführungsbeispiel,
Figuren 9 und 10 Seitansichten des Rührwerks nach dem zweiten Ausführungsbeispiel in Einzeldarstellung, und
Figuren 11 und 12 Funktionsweisen des Rührwerks nach dem zweiten Ausführungsbeispiel.

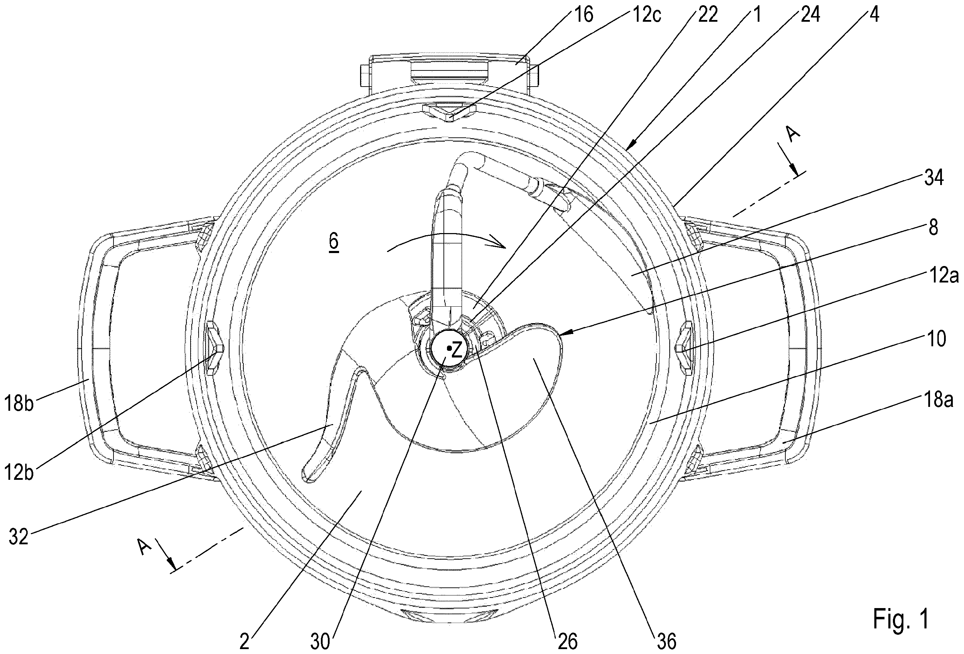

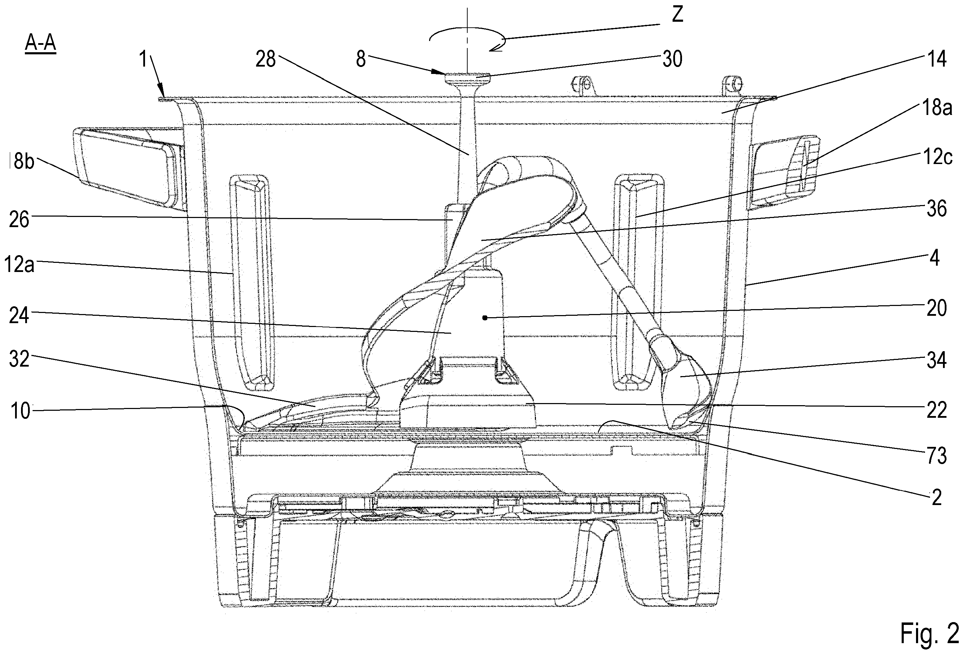

In den Figuren 1 und 2 ist eine Draufsicht auf ein Gefäß 1 eine elektromotorische Küchenmaschine und ein Schnitt durch das Gefäß 1 gezeigt. Das Gefäß 1 hat einen Boden 2 und eine zylindrische Wandung 4, die zusammen einen Arbeitsraum 6 zum Bearbeiten von Lebensmitteln und/oder zum Zubereiten von Speisen begrenzen. Die Lebensmittel und/oder Speisen werden im Folgenden als Rührgut bezeichnet. Der Boden 2 des Gefäßes 1 und die Wandung 4 des Gefäßes werden zur Vereinfachung im Folgenden auch als Gefäßboden 2 und als Gefäßwandung 4 bezeichnet.

In dem Arbeitsraum 6 ist ein erstes Ausführungsbeispiel eines erfindungsgemäßes Rührwerk 8 zum Bearbeiten des Rührguts, insbesondere zum Vermischen bzw. Durchmischen des Rührguts, drehbar um eine Drehachse z angeordnet. Seine Drehachse z erstreckt sich orthogonal zum Boden 2 und verläuft bei ordnungsgemäßer Aufstellung der Küchenmaschine in vertikaler Richtung. Seine Drehrichtung ist im Uhrzeigersinn. Das hier gezeigte erfindungsgemäße Rührwerk 8 ist insbesondere eine Kombination eines Knetwerks und eines Schraubwerks.

Der Gefäßboden 2 geht über eine Hohlkehle 10 in die Gefäßwandung 4 über, an der in Drehrichtung betrachtet mehrere vertikale und spitzdachartige Leitelemente 12a, 12b, 12c zur Umlenkung des Rührguts angeordnet sind. Eine obere Öffnung 14 des Gefäßes 1 zum Einfüllen des Rührguts und zur Entnahme des Rührguts kann über einen an einem Gelenk 16 angebundenen Deckel (nicht gezeigt) verschlossen werden. Zur Handhabung des Gefäßes 1 weist dieses außenwandungsseitig zwei zueinander entgegengesetzte Handgriffe 18a, 18b auf. Die Öffnung 14 des Gefäßes 1 und der nicht gezeigte Deckel des Gefäßes 1 werden zur Vereinfachung im Folgenden auch als Gefäßöffnung 14 und als Gefäßdeckel bezeichnet.

Das Rührwerk 8 hat einen sich Richtung der Drehachse z erstreckenden Grundkörper 20 mit in vertikaler Richtung von unten nach oben betrachtet (vom Gefäßboden 2 zur Gefäßöffnung 14) einem Fußabschnitt 22, einem Beinabschnitt 24, einem Halsabschnitt 26 und einem Kopfabschnitt 28. Im Wesentlichen ist der Grundkörper 20 rotationsymmetrisch zur Drehachse z ausgebildet.

Der Fußabschnitt 22 bildet in seinem Inneren einen Kupplungsabschnitt zur lösbaren Verbindung mit einer nicht gezeigten Motorwelle eines Antriebsmotors der Küchenmaschine aus. Er hat einen zylindrischen unteren Rand und einem sich in Richtung des Beinabschnitts 24 verjüngenden Konusabschnitt.

Der Beinabschnitt 24 und der Halsabschnitt 26 sind im Wesentlichen zylindrisch, wobei der Halsabschnitt 26 gegenüber dem Beinabschnitt 24 radial nach innen zurückgestuft ist. Der Halsabschnitt 26 hat hier eine sich vertikal zum Halsabschnitt 26 leicht verjüngende konusartige Außenkontur.

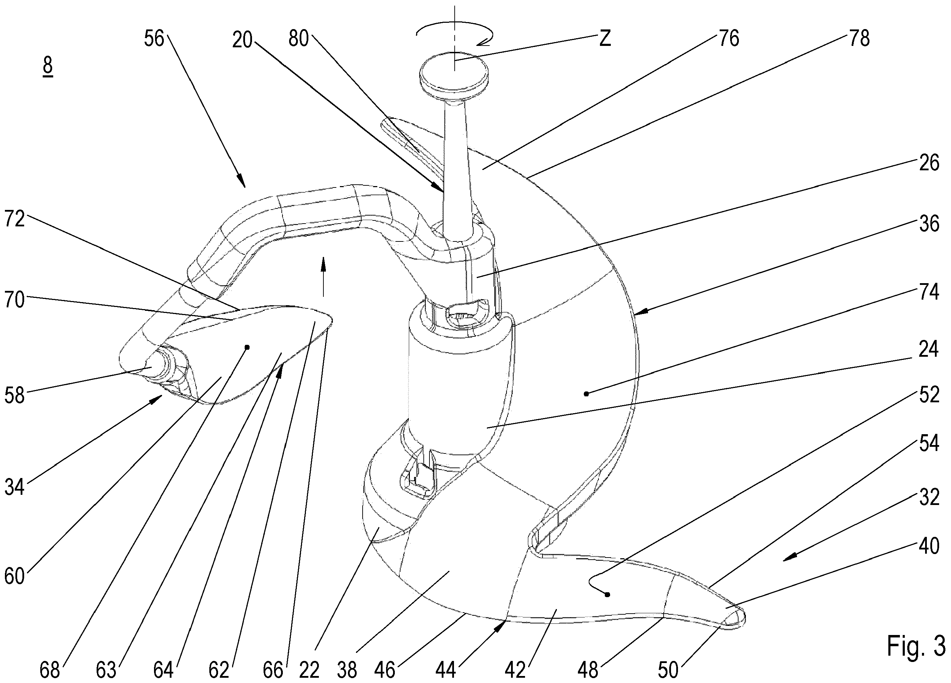

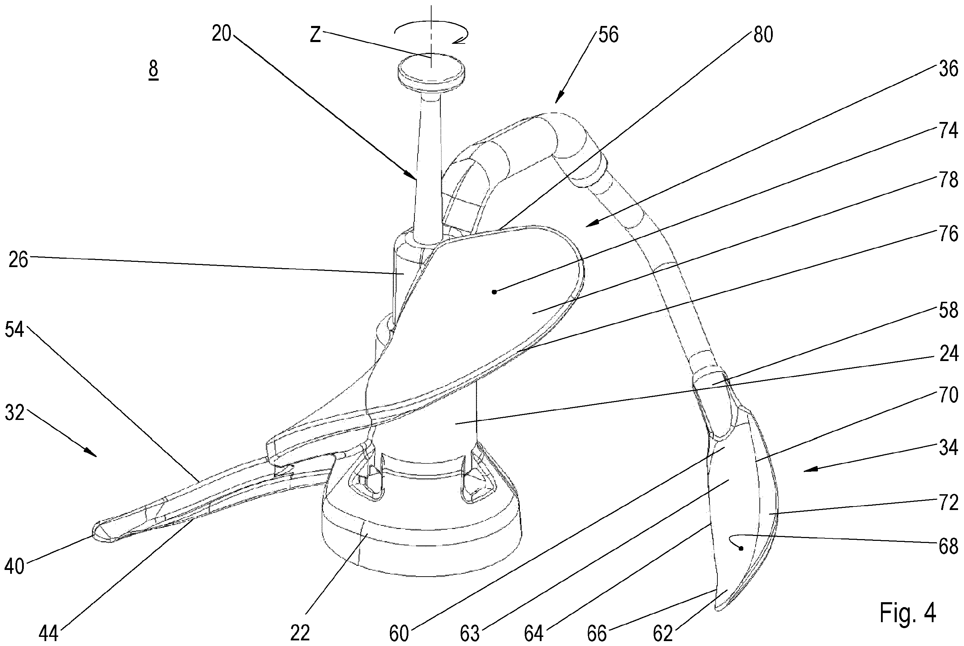

Der Kopfabschnitt 28 hat einen sich nach oben hin verjüngenden Kegelabschnitt mit einem tellerartigen Kopf 30, der im Betrieb in eine Führungsausnehmung des Gefäßdeckels eingreift. Das Rührwerk 8 dreht sich im Betrieb der Küchenmaschine gemäß der Ausrichtung in den Figuren 2 und 3 im Uhrzeigersinn. Es hat drei Rührelemente 32, 34, 36 zum Vermischen des Rührguts - ein unteres Rührelement 32, ein äußeres Rührelement 34 und ein gewindeartiges Rührelement 36. Das untere Rührelement 32 und das äußere Rührelement 34 sind bodennah und auf gleicher bzw. nahezu gleicher Höhe angeordnet, wohingegen das gewindeartige Rührelement 36 eine wesentliche Erstreckung in vertikaler Richtung hat. Im Folgenden erfolgt eine nähere Erläuterung des Rührwerks 8 und dessen Rührelemente 32, 34, 36 in den Figuren 3 und 4.

Mittels des unteren Rührelements 32 wird das sich auf dem Gefäßboden 2 befindende Rührgut weg von der Drehachse nach außen zur Gefäßwandung 4 befördert. Hierzu beaufschlagt das untere Rührelement 32 das bodennahe Rührgut mit einer weg von der Drehachse z nach außen zur Gefäßwandung 4 gerichteten Bewegungskomponente.

Das untere Rührelement 32 ist flügelartig mit einem Wurzelbereich 38, mittels dem es an dem Fußabschnitt 22 im Wesentlichen tangential angebunden ist, und mit einen drehachsenfernen Spitzenbereich 40 ausgebildet, der nahezu radial ausläuft bzw. sich radial in Richtung der Gefäßwandung 4 erstreckt. Der Spitzenbereich 40 ist über einen Zwischenbereich 42 mit dem Wurzelbereich 38 verbunden und sowohl gegenüber dem Wurzelbereich 38, als auch gegenüber dem Zwischenbereich 42 verjüngt ausgebildet. Mit anderen Worten, das untere Rührelement 32 läuft in Richtung der Wandung 4 des Gefäßes aus, wobei sowohl seine Höhe (Erstreckung in vertikaler Richtung), als auch seine Breite (Erstreckung in Umfangsrichtung) abnimmt. Dabei hat das untere Rührelement 32 eine derartige Länge (Erstreckung weg von der Drehachse nach außen), dass der Spitzenbereich 40 fast bis zur Hohlkehle 10 des Gefäßes 1 heranragt und nur über einen schmalen Spalt von dieser beabstandet ist (Figur 1).

Zum Aufnehmen des Rührguts von dem Gefäßboden 2 weist das untere Rührelement eine Schaberkante 44 auf, die sich von dem Wurzelbereich 38 über den Zwischenbereich 42 bis über den Spitzenbereich 40 erstreckt. Sie hat eine derartige Beabstandung von dem Boden des Gefäßes 1, dass das Rührgut verlässlich aufgenommen wird. Bei einer Drehung des Rührwerks 8 wird die Schaberkante 44 nahezu distanzlos, d.h. in einer sehr geringen vertikalen konstanten Höhe, über den Boden 2 des Gefäßes 1 geführt. Die Schaberkante 44 hat einen S-förmigen Verlauf, wobei sich ein konvexer Kantenabschnitt 46 im Wesentlichen am Wurzelbereich 38 befindet und dieser in einen konkaven Kantenbereich 48 in Richtung des Spitzenbereich 40 übergeht. Im Spitzenbereich 40 selbst läuft die Schaberkante 44 über einen im Wesentlichen geraden Kantenabschnitt 50 und bevorzugterweise radial aus. In Drehrichtung betrachtet ist der Spitzenbereich 40 somit hinter dem Wurzelbereich 38 angeordnet, was das Nachaußenfördern des Rührguts in Bodennähe des Gefäßes 1 zur Gefäßwandung 4 begünstigt.

Zum Verschieben des Rührguts weg von der Drehachse z in Richtung der Gefäßwandung 4 hat das untere Rührelement 32 zudem eine Schiebefläche 52, die sich über sämtliche seiner Bereiche 38, 40, 42 erstreckt und ausgehend von der Schaberkante 44 in einer Hinterkante 54 endet. Die Schiebefläche 52 steigt von der Schaberkante 44 in Richtung der Hinterkante 54 an, wobei in Drehrichtung betrachtet die Schaberkante 44 vor der Hinterkante 54 angeordnet ist. In Draufsicht verläuft die Hinterkante 54 nahezu parallel zur Schaberkante 44 (Figur 1). Allerdings ist sie im Spitzenbereich 40 leicht zum Boden 2 orientiert. Die Schiebefläche 52 ist über seine gesamte Erstreckung konvex und somit leicht buckelartig.

Mittels des äußeren Rührelements 34 wird das Rührgut in Boden- und Wandungsnähe axial bzw. vertikal von unten nach oben befördert. Das äußere Rührelement 34 bewegt das Rührgut somit in eine Förderrichtung, die orthogonal zur Förderrichtung des unteren Rührelements 32 verläuft. Hierzu beaufschlagt das äußere Rührelement 34 das boden- und wandungsnahe Rührgut mit einer axialen bzw. vertikalen Bewegungskomponente von dem Gefäßboden 2 weg in Richtung der Gefäßöffnung 14 bzw. zum Gefäßdeckel.

Das äußere Rührelement 34 ist am Ende 58 eines rohrartigen, abgewinkelten Ausleger 56 befestigt, der sich von dem Halsabschnitt 26 radial nach außen und dann schräg nach unten in Drehrichtung erstreckt. Das äußere Rührelement 34 ist bezogen auf die Drehachse z nahezu diametral zum unteren Rührelement 32 angeordnet (Figur 1).

Das äußere Rührelement 34 ist schaufel- bzw. spatelartig mit einem Wurzelabschnitt 60 ausgebildet, mittels dem es sich fluchtend von dem Ende 58 des Auslagers 56 erstreckt. Es hat einen Spitzenabschnitt 62, der über einen Zwischenabschnitt 63 mit dem Wurzelabschnitt 60 verbunden ist und sowohl gegenüber dem Wurzelabschnitt 60, als auch gegenüber dem Zwischenabschnitt 63 verjüngt ausgebildet ist. Mit anderen Worten, das äußere Rührelement 34 läuft von seinem Wurzelabschnitt 60 in Richtung seines Spitzenabschnitts 62 aus, wobei zumindest seine Höhe (Erstreckung in vertikaler Richtung) abnimmt und der Spitzenabschnitt 62 schmaler (Erstreckung in vertikaler Richtung) als der Zwischenabschnitt 63 ausgebildet ist.

Zum Aufnehmen des wandungsnahen Rührguts von dem Gefäßboden 2 bzw. zum Aufnehmen des Rührguts, das das untere Rührelement 32 weg von der Drehachse z nach außen zur Gefäßwandung 4 befördert hat, weist das äußere Rührelement 34 eine Vorderkante 64 auf, die sich von dem Wurzelabschnitt 60 über den Zwischenabschnitt 63 bis über den Spitzenabschnitt 62 erstreckt. Insbesondere hat die Vorderkante 64 im Spitzenabschnitt 62 einen Schaberabschnitt 66, der nahezu distanzlos über den Gefäßboden 2 radial innen zur Hohlkehle 10 geführt ist. Hierzu ist der Spitzenabschnitt 62 entsprechend gegenüber dem Wurzelabschnitt 60 und dem Zwischenabschnitt 63 abgesenkt bzw. nach unten hin zum Gefäßboden 2 geneigt. Der Schaberabschnitt 66 endet somit vor der Hohlkehle 10 auf einer Kreisbahn, durch dessen Mittelpunkt die Drehachse z verläuft. Die Kreisbahn, auf die der Spitzenabschnitts 62 endet ist bevorzugterweise enger an der Hohlkehle 10 geführt als eine konzentrische Kreisbahn, auf die der Spitzenbereichs 40 endet (Figur 1). Mit anderen Worten, der Spitzenabschnitt 62 des äußeren Rührelements 34 ist radial außen zum Spitzenbereich 40 des unteren Rührelements 32 angeordnet. Dabei sind der Spitzenabschnitt 62 und der Spitzenbereich 40 nahezu gegenüberliegend angeordnet, leicht versetzt zur Drehachse z (Figur 1).

Das äußere Rührelement 34 hat eine Arbeitsfläche 68, die sich über sämtliche seiner Abschnitte 60, 62, 63 erstreckt und ausgehend von der Vorderkante 64 in einer Hinterkante 70 endet. Die Arbeitsfläche 68 hat zwei Funktionen. Zum einen soll sie das wandungsnahe Rührgut anheben bzw. nach oben fördern. Zum anderen soll sie die Rührgutteilmenge, die es nicht nach oben befördern kann, zurück in Richtung der Drehachse z und somit in Gegenrichtung zum unteren Rührelement 32 verschieben. Die Arbeitsfläche 68 steigt von der Vorderkante 64 in Richtung der Hinterkante 70 an, wobei in Drehrichtung betrachtet die Vorderkante 64 vor der Hinterkante 70 angeordnet ist. Die Arbeitsfläche 68 ist über seine gesamte Erstreckung bevorzugterweise leicht konkav. Sie kann allerdings auch konvex und somit buckelartig sein.

Die Hinterkante 70 geht in eine von der Arbeitsfläche 68 abgewandten rückwärtigen Körperabschnitt 72 über, der die tangential zu einer Kreisbahn verläuft, die konzentrisch zu den Kreisbahnen des Spitzenabschnitts 62 und des Spitzenbereichs 40 und radial außen zu diesen beiden Kreisbahnen angeordnet ist (Figur 1). Die Kreisbahn, zu der der rückwärtige Körperabschnitt 72 tangential verläuft, bildet in dem gezeigten Ausführungsbeispiel ein radiale Erweiterungskante des Gefäßes 1 im Anschluss an die Hohlkehle 10 ab (Figur 2), so dass das Rührgut bereits vor einer Berührung mit der Gefäßwandung 4 von dem äußeren Rührelement 34 angehoben wird.

Das gewindeartige Rührelement 36 beaufschlagt das Rührgut drehachsennah mit einer vertikalen Bewegungskomponente von unten nach oben. Das gewindeartige Rührelement 36 befördert das Rührgut somit in eine Förderrichtung, die orthogonal zur Förderrichtung des unteren Rührelements 32 verläuft. Es fördert somit das bodennahe Rührgut drehachsennah nach oben in Richtung der Gefäßöffnung 14 bzw. des Gefäßdeckels. Die Förderrichtungen des äußeren Rührelements 34 und des gewindeartigen Rührelements 36 verlaufen somit mit gleicher vertikaler Orientierung parallel zueinander.

Es erstreckt sich in seine Förderrichtung betrachtet ausgehend vom Wurzelbereich 38 des unteren Rührelements 32 in Drehrichtung des Rührwerks 8 gewinde- bzw. spiral- bzw. schneckenartig um einen Umfangsbereich des Beinabschnitts 24 und des Halsabschnitts 26. Bevorzugterweise erstreckt es sich um etwa 270° um den Grundkörper 20 herum (Figur 1). In Drehrichtung betrachtet hat es eine bei diesem Ausführungsbeispiel oberen Führungsfläche 74.

Die Führungsfläche 74 weist in Richtung der Gefäßöffnung 14 bzw. des Gefäßdeckels und ist somit von dem Gefäßboden 2 abgewandt. Sie hat eine konstante Breite (radiale Erstreckung) und ist zumindest im Bereich eines oberen freien Endabschnitt 76 in Drehrichtung derart geneigt, dass eine Vorderkante 78 des äußeren Rührelements 34 im Bereich des freien Endabschnitts 76 vertikal tiefer als seine Hinterkante 80 im Bereich des freien Endabschnitts 76 angeordnet ist. Bevorzugterweise endet der freie Endabschnitt 76 auf Höhe des Auslegers 56, wobei er von diesem in Umfangsrichtung beabstandet ist. Im Bereich des unteren Rührelements 32 erstreckt sich die Vorderkante 78 des gewindeartigen Rührelements 34 von der Hinterkante 54 im Wurzelbereich 38. Dabei erstreckt sich die Führungsfläche 74 stufenlos von dem Wurzelbereich 38, so dass die Schiebefläche 52 nahtlos in den Führungsfläche 74 übergeht.

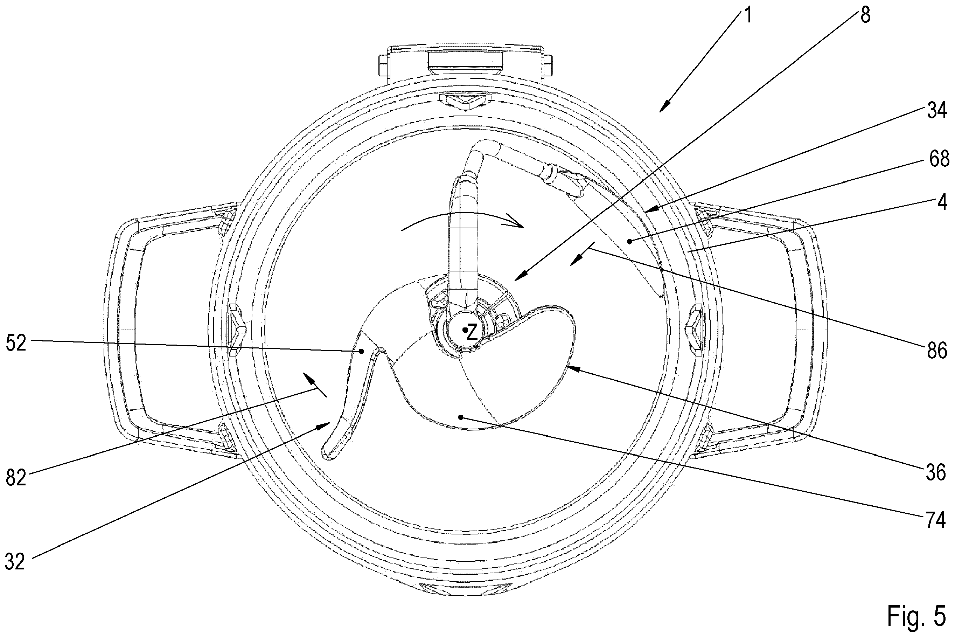

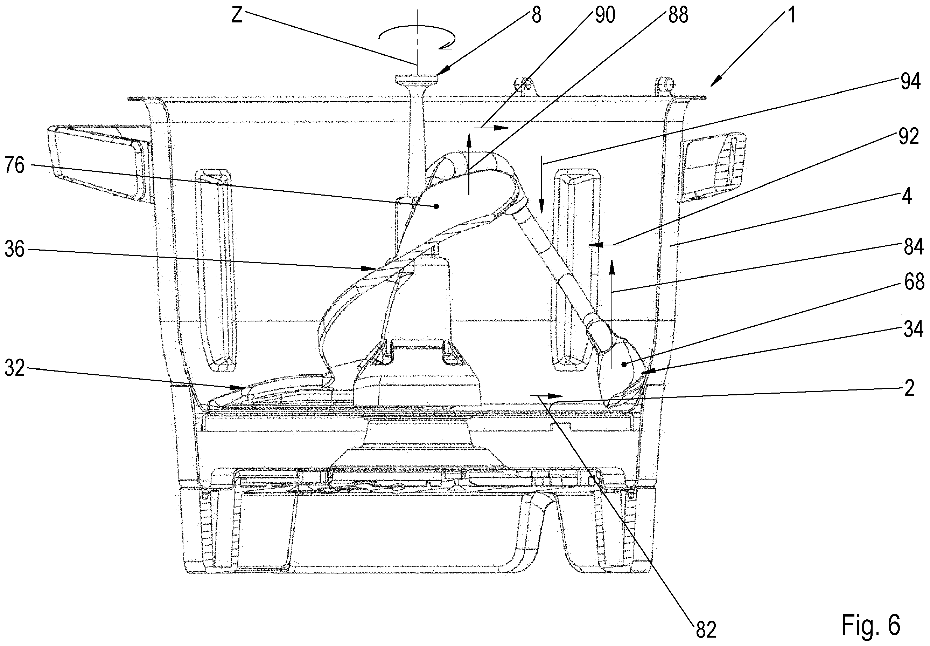

Im Folgenden wird die Funktionsweise des Rührwerks 8 anhand der Figuren 5 und 6 erläutert. Im Betrieb der Küchenmaschine rotiert das Rührwerk 8 im Uhrzeigersinn. Das sich auf dem Gefäßboden 2 befindende Rührgut wird über die Schiebefläche 52 des unteren Rührelements 32 horizontal weg von der Drehachse z radial nach außen zur Gefäßwandung 4 bewegt (Figur 5, Pfeil 82). Im Bereich der Wandung 4 nimmt das äußere Rührelement 34 das Rührgut über seine Arbeitsfläche 68 auf und befördert dieses zumindest teilweise nach oben in Richtung der Gefäßöffnung 14 bzw. des Deckels (Figur 6, Pfeil 84). Die Rührgutteilmenge, die das äußere Rührelement 34 nicht nach oben fördert, da die Rührgutteilmenge nicht wandungsnah genug ist, schiebt es in Richtung der Drehachse z (Figur 5, Pfeil 86), so dass das untere Rührelement 32 dieses wieder erfassen und weg von der Drehachse z schieben kann, um im Bereich der Gefäßwandung 4 nun von dem äußeren Rührelement 34 angehoben zu werden. Trotz seiner vertikalen Förderrichtung hat das äußere Rührelement 34 auch eine radial nach innen gerichtete Förderrichtung.

Das gewindeartige Rührelement 36 nimmt das drehachsen- und bodennahe Rührgut auf und befördert dieses über seine Führungsfläche 74 nach oben (Figur 6, Pfeil 88).

Sobald die Führung durch das äußere Rührelement 34 und durch das gewindeartige Rührelement 36 endet, fällt das Rührgut aufgrund der Schwerkraft in einem Bereich (Zwischenbereich) zwischen dem gewindeartigen Rührelement 36 und dem äußeren Rührelement 32 wieder nach unten (Figur 6, Pfeile 90, 92, 94). Da die Führungsfläche 76 des gewinderartigen Rührelements 36 oberhalb der Arbeitsfläche 68 des äußeren Rührelements 32 endet, wird das drehachsennahe Rührgut weiter nach oben befördert als das wandungsnahe Rührgut, so dass das wandungsnahe Rührgut in dem Zwischenbereich in das drehachsennahe Rührgut eingemischt wird (Figur 6, Pfeil 92). Es bilden sich also in Seitenansicht nach Figur 6 zwei Kreisläufe (ein drehachsennaher und ein wandungsnaher Kreislauf) mit jeweils einer Rührguteilmenge aus, die bodenfern in einem Zwischenbereich des Gefäßes 1 zusammengeführt und bodennah wieder getrennt werden.

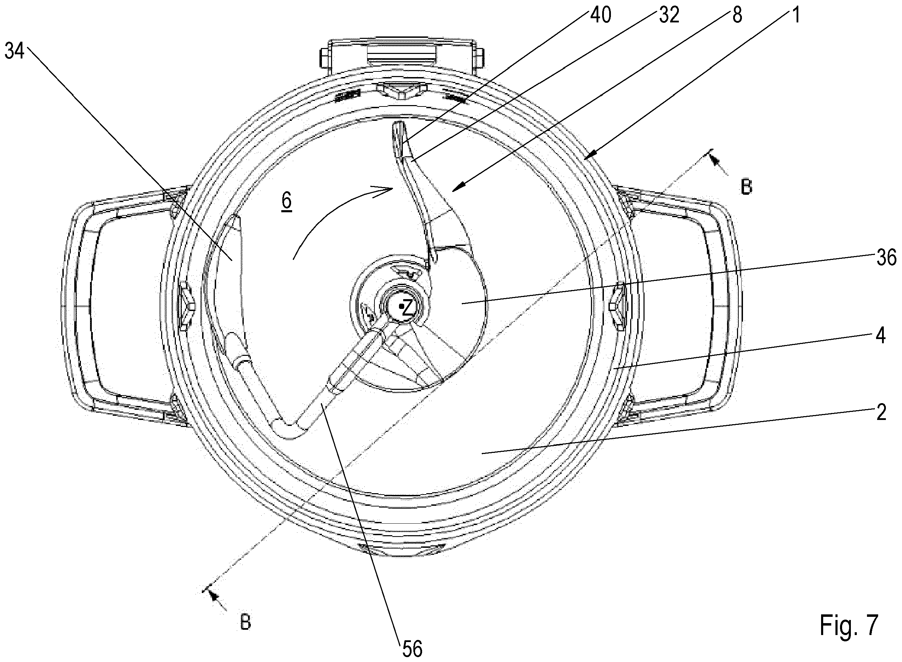

In den Figuren 7 bis 12 ist ein zweites Ausführungsbeispiel eines erfindungsgemäßes Rührwerk 8 zum Bearbeiten des Rührguts, insbesondere zum Vermischen des Rührguts, eingesetzt in einen Arbeitsraum 6 eines Gefäß 1 einer elektromotorischen Küchenmaschine in Draufsicht und in Einzeldarstellung gezeigt. Das Rührwerk 8 ist drehbar um eine Drehachse z angeordnet und insbesondere eine Kombination eines Knetwerks und eines Schraubwerks. Seine Drehachse z erstreckt sich orthogonal zum Gefäßboden 2 und verläuft bei ordnungsgemäßer Aufstellung der Küchenmaschine in vertikaler Richtung.

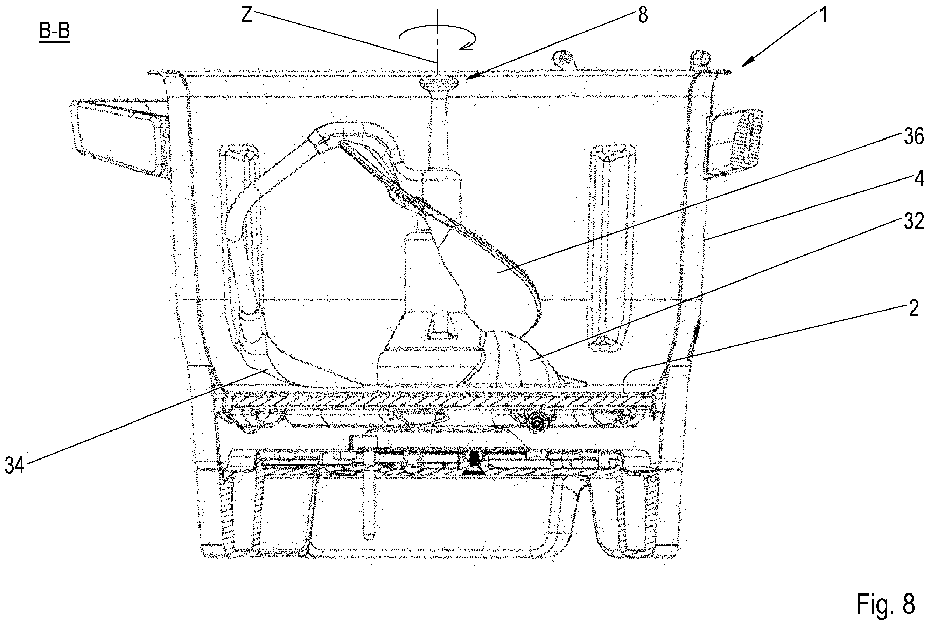

Das Rührwerk 8 dreht sich im Betrieb der Küchenmaschine gemäß der Ausrichtung in den Figuren 7 und 8 im Uhrzeigersinn. Es hat wie das erste Ausführungsbeispielen nach den Figuren 1 bis 6 ein unteres Rührelement 32, ein äußeres Rührelement 34 und ein gewindeartiges Rührelement 36. Die Funktionen und der Aufbau bzw. die Anordnung des unteren Rührelements 32 und des äußeren Rührelements 34 des ersten und zweiten Ausführungsbeispiels sind gleich, so dass auf wiederholende Erläuterungen verzichtet und stattdessen auf die diesbezüglichen Ausführungen zu den Figuren 1 bis 4 verwiesen wird. Demgemäß beaufschlagt das untere Rührelements 32 des zweiten Ausführungsbeispiel das Rührgut mit einer bodennahen weg von der Drehachse z zur Gefäßwandung 4 gerichteten Bewegungskomponente und das äußere Rührelement 34 beaufschlagt das Rührgut mit einer orthogonalen, also einer axialen, und insbesondere vertikal nach oben gerichteten Bewegungskomponente.

Im Wesentlichen Unterschied zum ersten Ausführungsbeispiel beaufschlagt das gewindeartige Rührelement 36 das Rührgut nicht mit einer vertikal nach oben gerichteten Bewegungskomponente, sondern mit einer vertikal nach unten gerichteten Bewegungskomponente. Die Förderrichtungen der gewindeartigen Rührelemente 36 der beiden Ausführungsbeispiele sind zwar orthogonal zur Bewegungskomponente des unteren Rührelements 32 und parallel zur Bewegungskomponente des äußeren Rührelements 34, allerdings entgegengesetzt zueinander orientiert. Aufgrund dessen erfolgt in den Figuren 7 bis 10 lediglich eine nähere Erläuterung des gewindeartigen Rührelements 36.

Das gewindeartige Rührelement 36 beaufschlagt das Rührgut drehachsennah mit einer axialen Bewegungskomponente von oben nach unten oben. Es fördert somit gefäßöffnungsseitiges bzw. deckelseitige und somit oberes Rührgut entlang der Drehachse z nach unten in Richtung des Gefäßbodens 2. Bevorzugterweise erstreckt es sich um etwa 180° um den Grundkörper 20 herum (Figur 7).

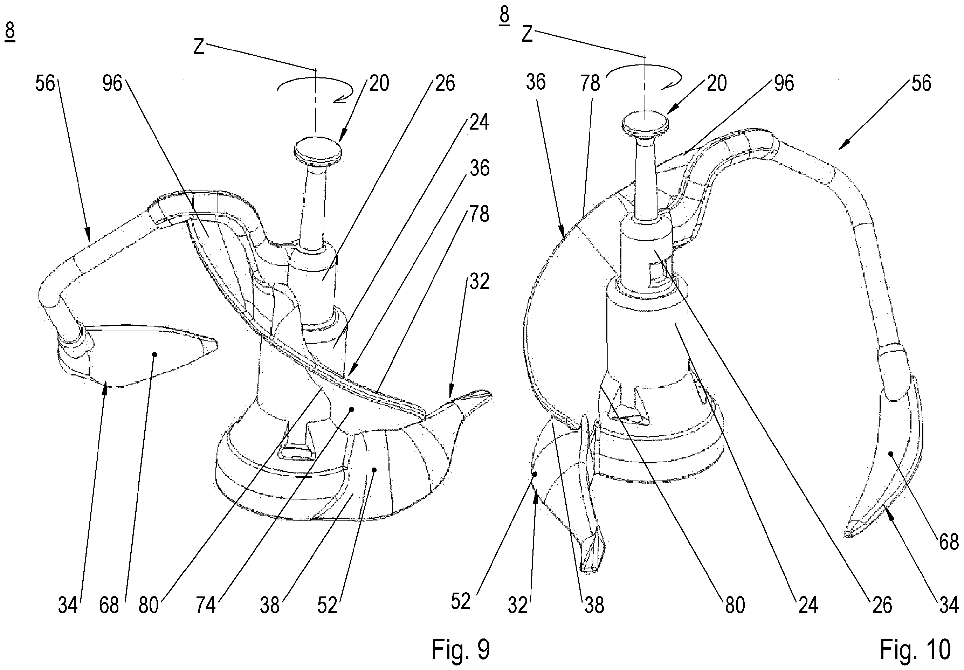

Wie in den Figuren 9 und 10 beziffert, erstreckt sich das gewindeartige Rührelement 36 in seine Förderrichtung betrachtet in Drehrichtung des Rührwerks 8 von einem Ausleger 56 zur Halterung des äußeren Rührelements 34 in Richtung eines Wurzelbereichs 38 des unteren Rührelements 32 entlang eines Halsabschnitts 26 und eines Beinabschnitts 24 seines Grundkörpers 20. Es ist hierzu mit seinem Anfangsschnitt 96 an einem drehachsennahen Abschnitt des Auslegers 56 angebunden und endet im Bereich des Wurzelbereichs 38 an einer Hinterkante 54 des unteren Rührelement 32. Aufgrund dieser Orientierung verläuft das gewindeartige Rührelement 36 des zweiten Ausführungsbeispiels gegensinnig zum gewindeartigen Rührelement 36 des ersten Ausführungsbeispiels nach den Figuren 1 bis 6.

In Drehrichtung betrachtet hat das gewindeartige Rührelement 36 des zweiten Ausführungsbeispiels eine in den Figur 9 bezifferte untere Führungsfläche 74. Die Führungsfläche 74 weist im Betrieb in Richtung des Gefäßbodens 2 bzw. nach unten und ist somit dem Gefäßboden 2 und einer Schiebefläche 52 des unteren Rührelements 32 in dessen Wurzelbereich 38 zugewandt. Die Führungsfläche 74 hat eine konstante Breite (radiale Erstreckung) und ist bevorzugterweise derart geneigt, dass sie in sich verdreht ist, so dass eine Vorderkante 78 des gewindeartigen Rührelements 36 bodennah vertikal höher und bodenfern tiefer als seine mit dem Grundkörper 20 verbundene Hinterkante 80 angeordnet ist.

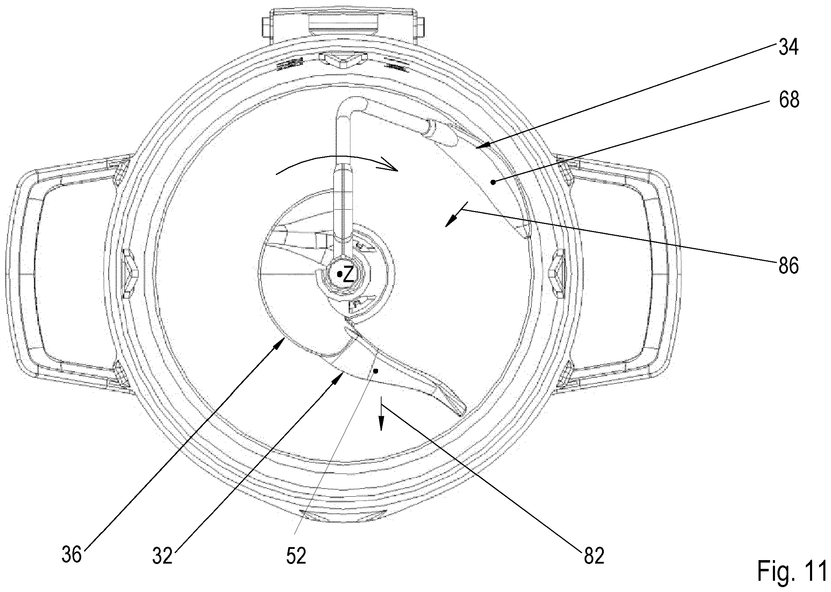

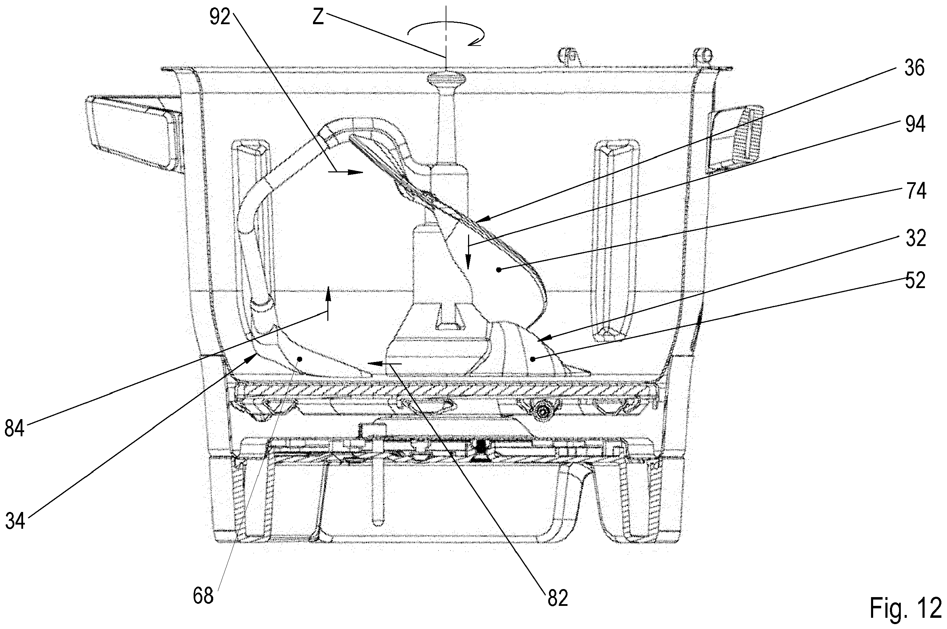

Im Folgenden wird die Funktionsweise des Rührwerks 8 anhand der Figuren 11 und 12 erläutert. Im Betrieb der Küchenmaschine rotiert das Rührwerk 8 im Uhrzeigersinn. Das sich auf dem Gefäßboden 2 befindende Rührgut wird über eine Schiebefläche 52 des unteren Rührelement 32 horizontal weg von der Drehachse z in Richtung der Gefäßwandung 4 bewegt (Figur 11, Pfeil 82). Im Bereich der Gefäßwandung 4 nimmt das äußere Rührelement 34 das Rührgut über seine Arbeitsfläche 68 auf und befördert dieses nach oben in Richtung einer Gefäßöffnung 14 bzw. eines Gefäßdeckels (Figur 12, Pfeil 84). Die Rührgutteilmenge, die das äußere Rührelement 34 nicht nach oben fördert, da die Rührgutteilmenge nicht wandungsnah genug ist, schiebt es zur Drehachse z (Figur 11, Pfeil 86), so dass das untere Rührelement 32 dieses wieder weg von der Drehachse z schieben kann, um dort nun von dem äußeren Rührelement 34 angehoben zu werden. In einem oberen Gefäßbereich wird das Rührgut von dem äußeren Rührelement 34 quasi an das gewindeartige Rührelement 36 übergeben (Figur 12, Pfeil 92). Das gewindeartige Rührelement 36 befördert nun über seine Führungsfläche 74 das drehachsennahe Rührgut zurück zum Gefäßboden 2 und übergibt es dort dem unteren Rührelement 32 (Figur 12, Pfeil 94. In Seitenansicht wird das Rührgut also im Kreis befördert und vermischt.

Im zweiten wesentlichen Unterschied zum ersten Ausführungsbeispiel sind das untere Rührelement 32 und das äußere Rührelement 34 in Umfangsrichtung betrachtet nicht wie bei dem ersten Ausführungsbeispiel im Wesentlichen diametral zur Drehachse z zueinander angeordnet, sondern in Drehrichtung betrachtet in einem Umfangsabstand von etwa 90° (Figur 7) zueinander. Dies liegt darin begründet, dass der Ausleger 56 bei dem zweiten Ausführungsbeispiel (bei gleicher Abwinkelung wie beim ersten Ausführungsbeispiel) in Umfangsrichtung versetzt am Halsabschnitt 26 angebunden ist und somit in Drehrichtung betrachtet in Richtung des äußeren Rührelements 34 verschoben ist.

Offenbart sind ein Rührwerk zum Rühren von Rührgut in einem Gefäß einer elektromotorischen Küchenmaschine, deren einzelnen Rührelemente dazu eingerichtet sind, das Rührgut bzw. Teilmengen oder Bestandteile des Rührguts mit einer weg von einer Drehachse des Rührwerks gerichteten unteren Bewegungskomponente, mit einer zur unteren Bewegungskomponente ersten orthogonalen Bewegungskomponente und mit einer zur unteren Bewegungskomponente zweiten orthogonalen Bewegungskomponente und/oder mit einer unteren Gegenbewegungskomponente beaufschlagt wird, und eine Küchenmaschine

### Bezugszeichenliste

- 1: Gefäß
- 2: Boden / Gefäßboden
- 4: Wandung / Gefäßwandung
- 6: Arbeitsraum
- 8: Rührwerk
- 10: Hohlkehle
- 12a, b, c: Leitelement
- 14: Öffnung / Gefäßöffnung
- 16: Gelenk
- 18a, b: Handgriff
- 20: Grundkörper
- 22: Fußabschnitt
- 24: Beinabschnitt
- 26: Halsabschnitt
- 28: Kopfabschnitt
- 30: Kopf
- 32: unteres Rührelement
- 34: äußeres Rührelement
- 36: gewindeartiges Rührelement
- 38: Wurzelbereich
- 40: Spitzenbereich
- 42: Zwischenbereich
- 44: Schaberkante
- 46: konvexer Kantenbereich
- 48: konkaver Kantenbereich
- 50: gerader Kantenbereich
- 52: Schiebefläche
- 54: Hinterkante
- 56: Ende
- 58: Ausleger
- 60: Wurzelabschnitt
- 62: Spitzenabschnitt
- 63: Zwischenabschnitt
- 64: Vorderkante
- 66: Schaberabschnitt
- 68: Arbeitsfläche
- 70: Hinterkante
- 72: rückwärtiger Körperabschnitt
- 73: Ringkante
- 74: Führungsfläche
- 76: Endabschnitt
- 78: Vorderkante
- 80: Hinterkante
- 82: Pfeil
- 84: Pfeil
- 86: Pfeil
- 88: Pfeil
- 90: Pfeil
- 92: Pfeil
- 94: Pfeil
- 96: Anfangsabschnitt

- z: Drehachse

## Patentansprüche

1. Rührwerk (8) zum Rühren von Rührgut in einem Gefäß (1) einer elektromotorischen Küchenmaschine, mit einem Grundkörper (20), der sich entlang einer Drehachse (z) des Rührwerks (8) erstreckt und der einen Kupplungsabschnitt zur lösbaren Kupplung mit einer Motorwelle eines Elektromotors der Küchenmaschine hat,
wobei
- an dem Grundkörper (20) ein unteres Rührelement (32) angeordnet ist, das dazu eingerichtet ist, das Rührgut mit einer weg von der Drehachse (z) gerichteten ersten Bewegungskomponente zu beaufschlagen,
- sich entlang des Grundkörpers (20) ein gewindeartiges Rührelement (36) erstreckt, das dazu eingerichtet ist, das Rührgut mit einer zur unteren Bewegungskomponente ersten orthogonalen Bewegungskomponente zu beaufschlagen, und
- an einem Ausleger (56), der sich von dem Grundkörper (20) weg von der Drehachse (z) erstreckt, ein äußeres Rührelement (34) angeordnet ist, das dazu eingerichtet ist, das Rührgut mit einer zur unteren Bewegungskomponente zweiten orthogonalen Bewegungskomponente zu beaufschlagen und/oder mit einer unteren Gegenbewegungskomponente zu beaufschlagen,
wobei das untere Rührelement (32) und das äußere Rührelement (34) derart angeordnet sind, dass sie sich im Betrieb der Küchenmaschine nahe eines Gefäßbodens (2) auf gleicher oder nahezu gleicher Höhe befinden, wohingegen das gewindeartige Rührelement (36) eine wesentliche Erstreckung in vertikaler Richtung hat.

2. Rührwerk nach Patentanspruch 1, wobei das untere Rührelement (32) einen Wurzelbereich (38) und einen Spitzenbereich (42) hat, der gegenüber dem Wurzelbereich (38) verjüngt ausgebildet ist, wobei es von einer Schaberkante (44) ausgehend eine ansteigende Schiebefläche (52) hat, die in Drehrichtung hinter der Schaberkante (44) angeordnet ist.

3. Rührwerk nach Patentanspruch 2, wobei der Wurzelbereich (38) seitlich der Drehachse (z) mit dem Grundkörper (20) verbunden ist und der Spitzenbereich (42) des unteren Rührelements (32) radial ausläuft.

4. Rührwerk nach Patentanspruch 2 oder 3, wobei die Schaberkante (44) einen inneren Bogenabschnitt (46) und einen gegenläufigen äußeren Bogenabschnitt (48) aufweist.

5. Rührwerk nach einem der vorhergehenden Patentansprüche, wobei das äußere Rührelement (34) einen Wurzelabschnitt (60) und Spitzenabschnitt (62) hat, der gegenüber dem Wurzelabschnitt (60) verjüngt ausgebildet ist, wobei es von einer unteren Vorderkante (64) ausgehend eine ansteigende Arbeitsfläche (68) hat, die in Drehrichtung hinter der Vorderkante (64) angeordnet ist.

6. Rührwerk nach Patentanspruch 5, wobei der Spitzenabschnitt (62) des äußeren Rührelements (34) einen rückwärtigen Körperabschnitt (72) hat, der tangential zu einer Kreisbahn verläuft, deren Mittelpunkt auf der Drehachse (z) liegt.

7. Rührwerk nach einem der vorhergehenden Patentansprüche, wobei sich das gewindeartige Rührelement (36) vom Wurzelabschnitt (36) des unteren Rührelements (32) erstreckt und eine in Drehrichtung orientierte obere Führungsfläche (74) hat.

8. Rührwerk nach einem der vorhergehenden Patentansprüche, wobei das gewindeartige Rührelement (36) einen freien Endabschnitt (76) hat, dessen Hinterkante (80) höher als die Vorderkante (78) angeordnet ist.

9. Rührwerk nach einem der Patentansprüche 1 bis 5, wobei das gewindeartige Rührelement (36) eine in Drehrichtung orientierte untere Führungsfläche (74) hat.

10. Rührwerk nach Patentanspruch 9, wobei das gewindeartige Rührelement (36) einen Anfangsabschnitt (96) hat, mittels dem es drehachsennah mit dem Ausleger (56) verbunden ist, und sich bis zum Wurzelabschnitt (38) des unteren Rührelements (32) erstreckt, wobei der Anfangsabschnitt (96) in Drehrichtung hinter dem Spitzenabschnitt (62) des äußeren Rührelement (34) angeordnet ist.

11. Küchenmaschine mit einem Rührwerk (8) nach einem der vorhergehenden Patentansprüche.

## Claims

1. Stirring mechanism (8) for stirring food to be stirred in a vessel (1) of an electric motor-driven food processor, having a base body (20) which extends along an axis of rotation (z) of the stirring mechanism (8) and which has a coupling section for releasably coupling to a motor shaft of an electric motor of the food processor,
wherein
- a lower stirring element (32) is arranged on the base body (20) and said lower stirring element (32) is configured so as to influence the food to be stirred using a first movement component that is directed away from the axis of rotation (z),
- a thread-like stirring element (36) extends along the base body (20) and said thread-like stirring element (36) is configured so as to influence the food to be stirred using a first movement component which is orthogonal to the lower movement component, and
- an outer stirring element (34) is arranged on an extension arm (56) which extends from the base body (20) away from the axis of rotation (z) and said outer stirring element (34) is configured so as to influence the food to be stirred using a second movement component which is orthogonal to the lower movement component and/or using a lower counter-movement component,
wherein
the lower stirring element (32) and the outer stirring element (34) are arranged in such a manner that during the operation of the food processor they are located close to a vessel bottom (2) at the same or almost same height, whereas the thread-like stirring element (36) extends substantially in the vertical direction.

2. Stirring mechanism according to claim 1, wherein the lower stirring element (32) has a root region (38) and a tip region (42) which tapers with respect to the root region (38), wherein said lower stirring element (32) has a rising slide surface (52) which starts from a scraper edge (44) and which is arranged in the direction of rotation downstream of the scraper edge (44).

3. Stirring mechanism according to claim 2, wherein the root region (38) is connected at the side of the axis of rotation (z) to the base body (20) and the tip region (42) of the lower stirring element (32) tapers radially.

4. Stirring mechanism according to claim 2 or 3, wherein the scraper edge (44) has an inner arc section (46) and an outer arc section (48) that runs in the opposite direction.

5. Stirring mechanism according to one of the preceding claims, wherein the outer stirring element (34) has a root section (60) and a tip section (62) which tapers with respect to the root section (60), wherein said outer stirring element (34) has a rising working surface (68) starting from a lower front edge (64) and said rising working surface (68) is arranged downstream of the front edge (64) in the direction of rotation.

6. Stirring mechanism according to claim 5, wherein the top section (62) of the outer stirring element (34) has a rearward body section (72) that runs tangentially to a circular path, the centre point of which lies on the axis of rotation (z).

7. Stirring mechanism according to one of the preceding claims, wherein the thread-like stirring element (36) extends from the root section (36) of the lower stirring element (32) and has an upper guiding surface (74) that is oriented in the direction of rotation.

8. Stirring mechanism according to one of the preceding claims, wherein the thread-like stirring element (36) has a free end section (76), the rear edge (80) of which is arranged higher than the front edge (78).

9. Stirring mechanism according to one of claims 1 to 5, wherein the thread-like stirring element (36) has a lower guiding surface (74) that is oriented in the direction of rotation.

10. Stirring mechanism according to claim 9, wherein the thread-like stirring element (36) has a start section (96), by means of which it is connected close to the axis of rotation to the extension arm (56), and extends as far as the root section (38) of the lower stirring element (32), wherein the start section (96) is arranged downstream of the tip section (62) of the outer stirring element (34) in the direction of rotation.

11. Food processor having a stirring mechanism (8) according to one of the preceding claims.

## Revendications

1. Mélangeur (8) pour remuer un mélange dans un récipient (1) d'un robot culinaire à moteur électrique, avec un corps de base (20) qui s'étend le long d'un axe de rotation (z) du mélangeur (8) et qui comporte une section de couplage pour permettre un couplage détachable avec un arbre d'un moteur électrique du robot culinaire,
dans lequel
- un élément mélangeur inférieur (32) disposé sur le corps de base (20), qui est conçu pour appliquer au mélange un premier composant de mouvement orienté en éloignement de l'axe de rotation (z),
- un élément mélangeur fileté (36) disposé le long du corps de base (20), qui est conçu pour appliquer au mélange un premier composant de mouvement perpendiculaire au composant de mouvement inférieur, et
- sur un bras (56) qui s'étend depuis le corps de base (20) depuis l'axe de rotation (z) est disposé un élément mélangeur externe (34), qui est conçu pour appliquer au mélange un second composant de mouvement perpendiculaire au composant de mouvement inférieur et/ou un composant de contre-mouvement inférieur,
dans lequel
l'élément mélangeur inférieur (32) et l'élément mélangeur externe (34) sont disposés de façon à se trouver à la même hauteur ou quasiment à la même hauteur à proximité d'un fond du récipient (2) pendant le fonctionnement du robot culinaire, alors que l'élément mélangeur fileté (36) s'étend essentiellement en direction verticale.

2. Mélangeur selon la revendication 1, dans lequel l'élément mélangeur inférieur (32) comporte une partie racine (38) et une partie d'extrémité (42) conçue rétrécie par rapport à la partie racine (38), dans lequel il comporte une surface de translation montante (52) partant d'un bord de spatule (44), qui est disposé dans la direction de rotation derrière le bord de spatule (44).

3. Mélangeur selon la revendication 2, dans lequel la partie racine (38) est liée latéralement à l'axe de rotation (z) au corps de base (20) et s'étend radialement depuis la partie d'extrémité (42) de l'élément mélangeur inférieur (32).

4. Mélangeur selon la revendication 2 ou 3, dans lequel le bord de spatule (44) présente une section coudée interne (46) et une section coudée externe opposée (48).

5. Mélangeur selon l'une des revendications précédentes, dans lequel l'élément mélangeur externe (34) comporte une partie racine (60) et une partie d'extrémité (62) conçue rétrécie par rapport à la partie racine (60), dans lequel il comporte une surface de travail montante (68) partant d'un bord avant inférieur (64), qui est disposé dans la direction de rotation derrière le bord avant (64).

6. Mélangeur selon la revendication 5, dans lequel la partie d'extrémité (62) de l'élément mélangeur externe (34) comporte une partie de corps vers l'arrière (72) qui s'étend tangentiellement à une trajectoire circulaire dont le centre se situe sur l'axe de rotation (z).

7. Mélangeur selon l'une des revendications précédentes, dans lequel l'élément mélangeur fileté (36) s'étend depuis la partie racine (36) de l'élément mélangeur inférieur (32) et comporte une surface de guidage (74) orientée dans la direction de rotation.

8. Mélangeur selon l'une des revendications précédentes, dans lequel l'élément mélangeur fileté (36) comporte une partie terminale libre (76) dont le bord arrière (80) est disposé plus haut que le bord avant (78).

9. Mélangeur selon l'une des revendications 1 à 5, dans lequel l'élément mélangeur fileté (36) comporte une surface de guidage (74) orientée dans la direction de rotation.

10. Mélangeur selon la revendication 9, dans lequel l'élément mélangeur fileté (36) comporte une partie initiale (96) au moyen de laquelle il est lié au bras (56) près de l'axe de rotation et s'étend jusqu'à la partie racine (38) de l'élément mélangeur inférieur (32), la partie initiale (96) étant disposée dans le sens de rotation derrière la partie d'extrémité (62) de l'élément mélangeur externe (34).

11. Robot culinaire avec un mélangeur (8) selon l'une quelconque des revendications précédentes.
